# EUROPEAN PATENT APPLICATION

(11) **EP 2 669 404 A1**
(43) Date of publication of application: **04.12.2013**
(21) Application number: 12004189.2
(22) Date of filing: 31.05.2012
(51) Int. Cl.: C23F 13/06

(54) **Method and system for enhancing operation and efficiency of an AC circuit**

(71) Applicant: Enersaver UG, 80797 München (DE)
(72) Inventor: Taghavi, Ali, Tehran (IR)
(74) Representative: Grünecker, Kinkeldey, Stockmair & Schwanhäusser

(57) **Abstract**

A method and device are disclosed for enhancing operation and efficiency of an AC circuit by slowing down material degradation, reducing harmonic distortion and saving energy. The device comprises an electrochemical cell with two half-cells and two-electrodes, the two half-cells being connected via a membrane with low ion exchange rate and high relative permittivity, the device being adapted to being connected in parallel to a section of an AC circuit, the two electrodes being more electronegative than a conductive material in the AC circuit.

## Description

### Technical field

This invention relates to AC circuits, and in particular to a method and system for enhancing operation and efficiency thereof.

### Background

AC circuits are of paramount importance in industry, and enhancing their performance, for instance by extending their lifetime and by saving energy, are fundamental problems with huge consequences in many technical fields. AC circuits are present in many different scales, from integrated circuits to high voltage transmission lines. They may be operated to control mechanical devices via electromechanical interfaces.

Despite the enormous variety of AC circuits, many sources of performance and material degradation are common to most of them.

One such source of performance and material degradation is corrosion. Materials used in the manufacture of AC circuits may degrade due to oxidation, which leads to performance degradation and eventually to the need of replacement of corroded elements.

In the field of AC circuits, another factor that degrades performance and reduces the lifetime of associated devices is harmonic distortion. A circuit element such as an electric motor, for instance, will undergo overheating due to the magnetic core generating eddy currents proportional to the AC frequency. Higher harmonic generation, whereby an AC signal is distorted by addition of components whose frequencies are multiples of the original frequency or frequencies, therefore, may contribute to the degradation of performance and eventual shortening of the useful lifetime of the electric system.

Electrochemical methods for corrosion protection are well known in the field of metallurgy. Structures such as ships and submerged pipelines are usually protected from corrosion by sacrificial anodes, whereby the sacrificial anode is made of a material such as a metallic alloy which has a more negative electrochemical potential than the material to be protected. This causes the sacrificial anode to corrode, instead of the protected material. Other electrochemical methods include impressed current cathodic protection, whereby a DC power source is coupled to the anode.

In the prior art, however, electrochemical methods have never been used to enhance operation of AC circuits, in particular to protect AC circuits from performance and material degradation, or, more particularly, to protect an AC circuit against the effects of harmonic distortion, thereby enhancing its lifetime by reducing material overheating. The prior art also fails to use electrochemical methods to enhance operation of AC circuits by energy savings due to reduction in heat dissipation and/or to enhancement of current characteristics by current components provided by electrochemical methods.

### Summary

The object of the present invention is to provide a system and method for enhancing operation of AC circuits.

This object is accomplished by the invention as specified in the independent claims. Dependent claims describe preferred embodiments of the invention.

One aspect of this invention is a method for enhancing operation and efficiency of an AC circuit, the method comprising the steps of: providing a device comprising an electrochemical cell, the device further comprising means for being connected in parallel to a section of the AC circuit; and connecting the device in parallel to the section of the AC circuit, the section of the AC circuit comprising at least one conducting material, wherein the electrochemical cell comprises two electrodes and two half-cells, the two half-cells being connected via a membrane with low ion exchange rate and high relative permittivity or by a composition of a high resistance salt-bridge with restricted ion exchange rate and a thin insulator with high relative permittivity, and the two electrodes are more electronegative than the at least one conducting material.

Another aspect of the present invention is a device for enhancing operation and efficiency of an AC circuit, the device comprising an electrochemical cell, the device further comprising means for being connected in parallel to a section of the AC circuit, the section of the AC circuit comprising at least one conducting material, the electrochemical cell comprising two electrodes and two half-cells, the two half-cells being connected via a membrane with low ion exchange rate and high relative permittivity, the two electrodes being more electronegative than the at least one conducting material.

Yet another aspect of the present invention is a system comprising a device connected in parallel to a section of an AC circuit, the section of the AC circuit comprising at least one conducting material, the device comprising an electrochemical cell, the device further comprising means for being connected in parallel to the section of the AC circuit, the electrochemical cell comprising two electrodes and two half-cells, the two half-cells being connected via a membrane with low ion exchange rate and high relative permittivity, the two electrodes being more electronegative than the at least one conducting material.

The present invention has the advantage, with regard to the prior art, that the operation of the AC circuit is enhanced and protected from various sources of performance and material degradation.

First of all, due to the structure of the electrochemical cell, the device provides protection of the circuit, and in particular of its conducting elements, against corrosion, and consequently enhanced operation and material lifetimes. While electrochemical methods have been applied to protect such objects as pipelines and ships from corrosion, the present invention advantageously provides for an electrochemical cell with electrodes that are more electronegative than the conducting elements of the circuit and thereby protects the AC circuit from corrosion and enhances the useful life of the circuit. On the other hand, the membrane with a low ion exchange rate and high permittivity exhibits a significant capacitance that contributes to reducing the effect of harmonic distortion, thereby alleviating the energy dissipation and material degradation in such circuit elements as motors including a magnetic core. In particular, the present invention provides for energy saving and enhancement of the lifetime of the circuit by reducing harmonic distortion. Insulation degradation is also slowed down due to reduced heat dissipation. Furthermore, electrical conductance will be enhanced due to less heat being dissipated, which leads to reduction of conductor resistance. Finally, the present invention contributes to saving energy due to it providing current to the circuit.

### Drawings

Fig. 1 represents schematically a device for enhancing operation of an AC circuit according to the present invention.
Fig. 2 represents schematically a system for enhancing operation of an AC circuit according to the present invention.
Fig. 3 represents schematically a method for enhancing operation of an AC circuit according to the present invention.

### Detailed Description

In the following, preferred embodiments of the present invention are described with reference to the drawings. These preferred embodiments are intended as illustration of the principles of the present invention and not as limitation.

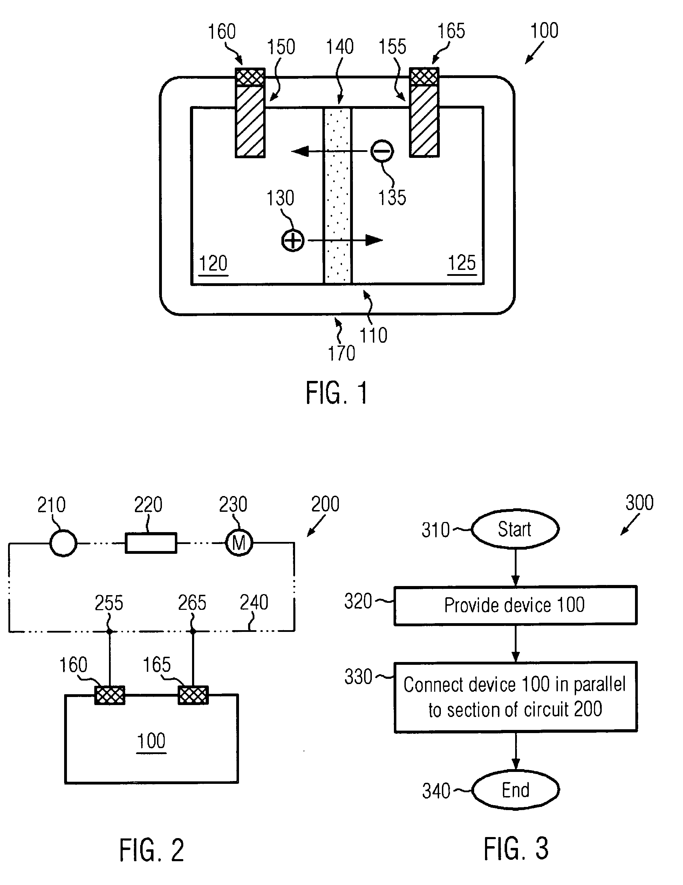

Fig. 1 represents a device 100 for enhancing operation and efficiency of an AC circuit according to the present invention. Device 100 comprises an electrochemical system such as an electrochemical cell 110. Electrochemical cell 110 may be a standard electrochemical cell such as a Daniell cell, but it is not limited thereto. One particular form of electrochemical cell is described in the following, but this description is provided for illustration and not limitation. Electrochemical cell 110 features two half-cells 120 and 125 with electrolytes that may be the same in both of the half-cells, or different in each of the two half-cells. Half-cells are connected by a separating element 140, which in some embodiments may be a membrane high relative permittivity but is not limited thereto. In other embodiments, separating element 140 may be a composition of a high resistance salt-bridge with restricted ion exchange rate and a thin insulator with high relative permittivity. Membrane 140 exhibits a significant capacitance due to the value of its relative permittivity, which contributes to a filtering effect of the device, whereby harmonic distortion may be reduced or eliminated, thereby saving energy and extending the lifetime of circuits protected by device 100 at least via reduction of heat dissipation associated with high harmonics. Electrochemical cell 110 features two electrodes 150 (anode) and 155 (cathode), respectively coupled to half-cells 120, 125. Electrode 150 (resp.155) are in contact with the electrolytes in half-cell 120 (resp. 125) and redox reactions take place between each electrode and the electrolyte in the half-cell with which it is in contact. Anode 150 undergoes oxidation, receiving electrons which may flow to an external system, such as an AC circuit, coupled to anode 150, in one embodiment via a contact 160. Cathode 155 undergoes reduction and may cedes electrons to the electrolyte in half-cell 125. The ceded electrons may come from an external system, such as an AC circuit, coupled to cathode 155, in one embodiment via a contact 165. Ions 130, 135 may flow through membrane 140 in order to maintain charge neutrality. In some embodiments, membrane 140 may feature a low ion exchange rate limiting the electric current flow through the membrane to values below a maximal current in the range of milliamperes. In some embodiments, device 100 comprises encapsulation means 170 that encapsulate electrochemical cell 110 and providing means 160, 165 to electrically couple an external system to the device. In some preferred embodiments, means 160, 165 are metallic or metallic alloy contacts connected, respectively, to electrodes 150, 155. Electrodes 150, 155, in a preferred embodiment, have a more negative electrochemical potential than conducting materials in an AC circuit whose operation is to be enhanced by device 100.

Fig. 2 represents a system comprising device 100 coupled to an AC circuit 200 whose operation and efficiency is to be enhanced. The depiction of circuit 200 in Fig. 2 is meant to represent only some typical elements of such a circuit without representing any limitation as to number, type or size of such elements, to the topology of the circuit, or to any external elements it may be coupled to. Circuit 200 may feature source elements 210 such as voltage sources, current sources and similar source elements. Other typical circuit elements 220 may be passive elements such as resistors, capacitors, inductors, and active elements such as diodes, transistors, and similar elements. Circuit 200 may comprise as well electromechanical devices 230 such as motors. Circuit 200 may comprise at least one conducting material 240, such as copper. More generally, circuit 200 may be part of an industrial system, and may either be used to control the industrial system in whole or in part, and/or provide the functionality of the system in whole or in part. Fig. 2 represents a preferred embodiment of a system in which device 100 is used to enhance operation of AC circuit 200 by being connected in parallel to a section thereof. In some embodiments, device 100 has means 160, 165 for connecting it to a section of circuit 200, being, in some embodiments, metallic or metallic alloy contacts coupled to electrodes 150, 155. Means 160, 165 are coupled to circuit 200 via contact points 255, 265. The contact may be performed in one of many ways known in the art, such as welding or via standard connectors. In some preferred embodiments, electrodes 150, 155 have a more negative electrochemical potential than conducting material 240, thereby providing for corrosion protection and enhanced operation and lifetime of circuit 200. Device 100 likewise acts, due to the capacitance of membrane 140, as a harmonic distortion reducing element, thereby contributing to energy saving and extended material lifetimes at least via reduction of heat dissipation associated with high harmonics. Due to the current component provided by device 100, energy saving is also accomplished in the operation of circuit 200.

Fig. 3 represents a method 300 to enhance operation and efficiency of an AC circuit according to an aspect of the present invention. Method 300 starts at step 310. In step 320, device 100 is provided. Some embodiments of device 100 have been described above with reference to Fig. 1. In step 330, device 100 is connected in parallel to a section of an AC circuit 200 whose operation is to be enhanced. In some preferred embodiments, device 100 comprises an electrochemical cell 110 with a membrane 140 with low ion exchange rate and high relative permittivity, as well as two electrodes 150, 155 with more negative electrochemical potential than at least one conducting material in circuit 200. By means of connecting device 100 to a section of AC circuit 200, the operation thereof is enhanced, via corrosion reduction, harmonic distortion reduction, and/or energy savings associated with current provided by electrochemical cell 110. Method 300 ends at step 340.

While the previous paragraphs have described in detail preferred embodiments of the present invention, the subject-matter presently claimed is not limited to these embodiments, but rather encompasses all variations, combinations and modifications covered by the following claims.

## Claims

1. A method (300) for enhancing operation and efficiency of an AC circuit (200), the method comprising the steps of:
providing a device (100) comprising an electrochemical cell (110), the device further comprising means (160, 165) for being connected in parallel to a section of the AC circuit; and
connecting the device in parallel to the section of the AC circuit, the section of the AC circuit comprising at least one conducting material (240),
wherein the electrochemical cell comprises two electrodes (150, 155) and two half-cells (120, 125), the two half-cells being connected via a membrane (140) with low ion exchange rate and high relative permittivity or by a composition of a high resistance salt-bridge with restricted ion exchange rate and thin insulator with high relative permittivty, and the two electrodes are more electronegative than the at least one conducting material.

2. The method of claim 1, wherein the membrane (140) allows for the flow of a maximal current in the range of milliamperes.

3. The method of claim 1, wherein the electrochemical cell (110) is a Daniell cell.

4. The method of claim 1, wherein the two electrodes (150, 155) are made of a metallic alloy more electronegative than aluminium.

5. The method of any one of claims 1 to 4, wherein the electrochemical cell (110) is encapsulated (170) and the means (160, 165) for connecting the device to the section of the AC circuit (200) comprise two metallic terminals connected to the electrodes (155, 155) of the electrochemical cell.

6. A system comprising a device (100) connected in parallel to a section of an AC circuit (200), the section of the AC circuit comprising at least one conducting material (240), the device comprising an electrochemical cell (110), the device further comprising means (160, 165) for being connected in parallel to the section of the AC circuit, the electrochemical cell comprising two electrodes (150, 155) and two half-cells (120, 125), the two half-cells being connected via a membrane (140) with low ion exchange rate and high relative permittivity or by a composition of a high resistance salt-bridge with restricted ion exchange rate and a thin insulator with high relative permittivity, the two electrodes being more electronegative than the at least one conducting material.

7. The system of claim 6, wherein the membrane (140) allows for the flow of a maximal current in the range of milliamperes.

8. The system of claim 6, wherein the electrochemical cell (110) is a Daniell cell.

9. The system of claim 6, wherein the two electrodes (150, 155) are made of a metallic alloy more electronegative than aluminium.

10. The system of any one of claims 6 to 9, wherein the electrochemical cell (110) is encapsulated (170) and the means (160, 165) for connecting the device to the section of the AC circuit (200) comprise two metallic terminals connected to the electrodes (150, 155) of the electrochemical cell.

11. A device (100) adapted for enhancing operation and efficiency of an AC circuit (200), the device comprising an electrochemical cell (110), the device further comprising means (160, 165) for being connected in parallel to a section of the AC circuit, the section of the AC circuit comprising at least one conducting material (240), the electrochemical cell comprising two electrodes (150, 155) and two half-cells (120, 125), the two half-cells being connected via a membrane (140) with low ion exchange rate and high relative permittivity or by a composition of a high resistance salt-bridge with restricted ion exchange rate and thin insulator with high relative permittivity, the two electrodes being more electronegative than the at least one conducting material.

12. The device of claim 11, wherein the membrane (140) allows for the flow of a maximal current in the range of milliamperes.

13. The device of claim 11, wherein the electrochemical cell (110) is a Daniell cell.

14. The device of claim 11, wherein the two electrodes (150, 155) are made of a metallic alloy more electronegative than aluminium.

15. The device of any one of claims 11 to 14, wherein the electrochemical cell (110) is encapsulated (170) and the means (160, 165) for connecting the device to the section of the AC circuit (200) comprise two metallic terminals connected to the electrodes (150, 155) of the electrochemical cell.
